(19) **Europäisches Patentamt**

**European Patent Office**

**Office européen des brevets**

(11) **EP 0 804 717 B1**

(12) **EUROPÄISCHE PATENTSCHRIFT**

(45) Veröffentlichungstag und Bekanntmachung des Hinweises auf die Patenterteilung:
**08.05.2002  Patentblatt 2002/19**

(51) Int Cl.$^7$: **G01F 1/66**

(21) Anmeldenummer: **96939839.5**

(22) Anmeldetag: **18.11.1996**

(86) Internationale Anmeldenummer:
**PCT/EP96/05082**

(87) Internationale Veröffentlichungsnummer:
**WO 97/19326 (29.05.1997 Gazette 1997/23)**

(54) **ULTRASCHALL-DURCHFLUSSMESSVERFAHREN**

ULTRASOUND FLOW MEASUREMENT METHOD

PROCEDE DE MESURE DE DEBIT PAR ULTRASONS

(84) Benannte Vertragsstaaten:
**CH DE DK GB LI NL**

(30) Priorität: **22.11.1995  NL 1001719**

(43) Veröffentlichungstag der Anmeldung:
**05.11.1997  Patentblatt 1997/45**

(73) Patentinhaber: **Krohne AG**
**4019 Basel (CH)**

(72) Erfinder:
 • **ROSKAM, Abram, Klaas**
  **NL-4254 CD Sleeuwijk (NL)**
 • **VAN BEKKUM, Jan, Aart**
  **NL-4223 MG Hoornaar (NL)**

 • **SMYCHLIAEV, Vladimir**
  **NL-3328 DS Dordrecht (NL)**

(74) Vertreter: **Gesthuysen, Hans Dieter, Dipl.-Ing.**
**Patentanwälte**
**Gesthuysen, von Rohr & Eggert**
**Postfach 10 13 54**
**45013 Essen (DE)**

(56) Entgegenhaltungen:
 **EP-A- 0 017 475     EP-A- 0 125 845**
 **EP-A- 0 605 944     EP-A- 0 639 776**
 **DE-A- 2 552 072     GB-A- 2 060 169**
 **US-A- 3 940 985**

EP 0 804 717 B1

**Beschreibung**

Die Erfindung betrifft ein Ultraschall-Durchflußmeßverfahren nach dem Oberbegriff des Patentanspruches 1. Der Begriff des Mediums umfaßt vorliegend sowohl Flüssigkeiten als auch Gase. Ein solches Verfahren ist bekannt aus der US 3,940,985. Dabei wird auch vorgeschlagen, die Reynoldssche Zahl grundsätzlich für eine Korrektur des Durchflußwertes zu verwenden. Ein Maß für die Reynoldssche Zahl sei das Verhältnis von mittlerer Geschwindigkeit des strömenden Mediums im Meßrohr zu der maximalen Geschwindigkeit des strömenden Mediums im Meßrohr.

Die bekannten Verfahren und Vorrichtungen für die Ultraschall-Durchflußmessung der mittleren Geschwindigkeit bzw. Durchflußmenge eines strömenden Mediums verwenden eine Vielzahl von Meßpfaden, die die Stützpunkte einer möglichst optimalen numerischen Integrationsmethode bilden. Hierbei wird die Integrationsmethode üblicherweise durch die Dimension bzw. Geometrie des Meßpfades und des Meßrohres bestimmt. Es existieren verschiedene klassische optimale Integrationsmethoden etwa von Tschebycheff, Gauß oder Taylor, die z. B. in den Offenlegungsschriften CH - A - 610 038, DE - A - 30 38 213 und EP - A - 0 125 845 wiedergegeben sind. Die aus diesen Offenlegungsschriften bekannten Verfahren und Vorrichtungen sind im Hinblick auf ihre Genauigkeit abhängig von der Viskosität des Mediums und damit von der Reynoldsschen Zahl. Zu dieser Tatsache wird z. B. verwiesen auf den Artikel "A New Integration Technique for Flowmeters with Chordal Paths" in Flow Measurement and Instrumentation, Vol. 1, No. 4, Juli 1990, Seiten 216 bis 224. Aus der EP - A - 0 017 475 und der DE - A - 30 38 213 sind Verfahren zur "Echtzeit"-Korrektur der Durchflußmenge bekannt. Jedoch wird dabei in Echtzeit nur die Durchschnittsgeschwindigkeit berücksichtigt, nicht jedoch die Viskosität. Die aus den genannten Offenlegungsschriften bekannten Verfahren und Vorrichtungen zur Ultraschall-Durchflußmessung weisen durch ihre Abhängigkeit von der Viskosität des Mediums eine nur ungenügende Genauigkeit auf, da sich die Viskosität insbesondere infolge von Temperaturänderungen während der Messung stark ändern kann. Eine hohe Genauigkeit wird jedoch insbesondere bei der Messung der Durchflußmengen von beispielsweise Gasen, Erdöl, Erdölprodukten und chemischen Produkten im allgemeinen gefordert. Ein zweites wichtiges Problem bei den bekannten Verfahren und Vorrichtungen sind die durch Einbaueffekte verursachten Störungen des Geschwindigkeitsprofils, durch die die Genauigkeit zusätzlich nachteilig beeinflußt wird.

Bei den genannten Produkten werden außerordentlich hohe Anforderungen an die Genauigkeit der Messung gestellt. So wird z. B. für Erdöl in dem Bereich der Durchflußmenge von 50 % bis 100 % der Nenndurchflußmenge ein maximaler Fehler von $\pm$ 0,15 % und in dem Bereich der Durchflußmenge von 10 % bis 100 % der Nenndurchflußmenge ein maximaler Fehler von $\pm$ 0,25 % gefordert. Bislang sind diese geforderten Genauigkeiten nur mit Turbinenzählern zu gewährleisten.

Bei der Messung der Durchflußmenge eines in einem Meßrohr fließenden Mediums ist es vorteilhaft, die Strömung des Mediums nicht zu stören. Gleichzeitig ist es erwünscht, die geforderte hohe Meßgenauigkeit mit Hilfe einer verhältnismäßig preiswerten Vorrichtung zu erhalten, die gleichzeitig eine lange Lebensdauer aufweist. Es ist weiter vorteilhaft, wenn eine derartige Vorrichtung nach der Produktion mit Wasser kalibriert werden kann und anschließend im Betrieb bei den Nutzern mit anderen Flüssigkeiten oder sogar Gasen nachkalibriert werden kann, um die geforderten Genauigkeiten zu gewährleisten.

Der Erfindung liegt somit die Aufgabe zugrunde, die mit dem gattungsgemäßen Ultraschall-Durchflußmeßverfahren erzielbare Meßgenauigkeit zu erhöhen.

Erfindungsgemäß wird die zuvor aufgezeigte und hergeleitete Aufgabe durch die Merkmale des Patentanspruches 1 gelöst.

Eine besonders bevorzugte Ausgestaltung erfährt die vorliegende Erfindung dadurch, daß vor der Bestimmung der Reynoldsschen Zahl im Betrieb ein Betriebsströmungsprofil basierend auf den gemessenen Geschwindigkeiten aufgenommen wird und daß für den Fall eines durch Einlaufeffekte oder andere Ursachen gestörten aktuellen Strömungsprofils dieses einer arithmetischen Korrektur auf der Grundlage eines zuvor bestimmten ungestörten Eichströmungsprofils unterworfen wird.

Im einzelnen gibt es nun eine Vielzahl von Möglichkeiten, das erfindungsgemäße Ultraschall-Durchflußmeßverfahren für strömende Medien auszugestalten und weiterzubilden. Dazu wird verwiesen einerseits auf die dem Patentanspruch 1 nachgeordneten Patentansprüche, andererseits auf die Beschreibung von bevorzugten Ausführungsbeispielen in Verbindung mit der Zeichnung. In der Zeichnung zeigt

Fig. 1       ein Blockschaltschild eines ersten Ausführungsbeispiels einer erfindungsgemäßen Vorrichtung zur Durchführung eines Ultraschall-Durchflußmeßverfahrens für strömende Medien,

Fig. 2 a) - f)   ein Flußdiagramm mit erläuternden Darstellungen des Ablaufes einer Korrektur der Strömungsprofile,

Fig. 3 a), b)   eine beispielhafte grafische Darstellung einer Korrektur von Strömungsprofilen bei großen Reynoldsschen Zahlen bzw. bei kleinen Reynoldsschen Zahlen,

Fig. 4 a), b)     grafische Darstellungen der Verbesserung der Genauigkeit bei der Anwendung eines erfindungsgemäßen Verfahrens für Medien verschiedener Viskosität,

Fig. 5     ein Blockschaltbild eines zweiten Ausführungsbeispiels einer erfindungsgemäßen Vorrichtung zur Durchführung eines Ultraschall-Durchflußmeßverfahrens für strömende Medien,

Fig. 6     ein Blockschaltbild eines Ausführungsbeispiels für einen Strömungsprofilkorrektor,

Fig. 7     ein Blockschaltbild eines Ausführungsbeispiels für einen Reynoldszahlmesser,

Fig. 8     ein Beispiel einer auf empirischen Daten basierenden Fehlerkurve zur Verwendung in einem erfindungsgemäßen Durchflußkorrektor und

Fig. 9 a) - d)     die Abhängigkeit verschiedener Geschwindigkeitsverhältnisse von der Reynoldsschen Zahl zur Erläuterung der Funktionsweise des erfindungsgemäßen Verfahrens bzw. der erfindungsgemäßen Vorrichtung.

Bei der zur Durchführung des erfindungsgemäßen Ultraschall-Durchflußmeßverfahrens eingesetzten Vorrichtung werden mindestens zwei, vorteilhaft jedoch fünf Geschwindigkeiten auf unterschiedlichen Meßpfaden gemessen, wobei die Meßpfade durch Ultraschallwandlerpaare, bestehend aus einander zugeordneten, auf unterschiedlichen Seiten des Meßrohres angeordneten Ultraschallwandlern, gebildet werden. Vorzugsweise hat sich das Strömungsprofil des Mediums in einer an die erfindungsgemäße Vorrichtung angeschlossenen Leitung mit Hilfe von Einlauf- und Auslaufsektionen formiert und möglichst vollständig entwickelt. Das genannte Eichströmungsprofil ist vorzugsweise eine möglichst gute Annäherung an das Strömungsprofil in einer vollständig entwickelten Strömung. Aus der Praxis ist bekannt, daß die Geschwindigkeiten auf bestimmten Meßpfaden weniger abhängig und auf anderen Meßpfaden stärker abhängig von der Reynoldsschen Zahl sind. Die weniger von der Reynoldsschen Zahl abhängigen Meßpfade sind die im Abstand von einem halben Radius des Meßrohres zur Wand des Meßrohres. Dahingegen liegen die stärker von der Reynoldsschen Zahl abhängigen Meßpfade beispielsweise in der Mitte oder nahe bei den Wänden des Meßrohres. Bei den zuletzt genannten Meßpfaden hat das Strömungsprofil einen maximalen Einfluß auf die Reynoldssche Zahl. Die erfindungsgemäße Vorrichtung kann auch mit mehr oder mit weniger als fünf Meßpfaden arbeiten, worunter jedoch mindestens ein Meßpfad sein muß, der relativ wenig von der Reynoldsschen Zahl abhängig ist.

Da die Reynoldssche Zahl in der erfindungsgemäßen Vorrichtung durchgängig gemessen wird, kann diese Messung "real-time" zur Korrektur der Durchflußmenge und eventuell zur Bestimmung der Viskosität und falls erforderlich auch zur Identifikation des Mediums eingesetzt werden. Dies wird im folgenden erläutert.

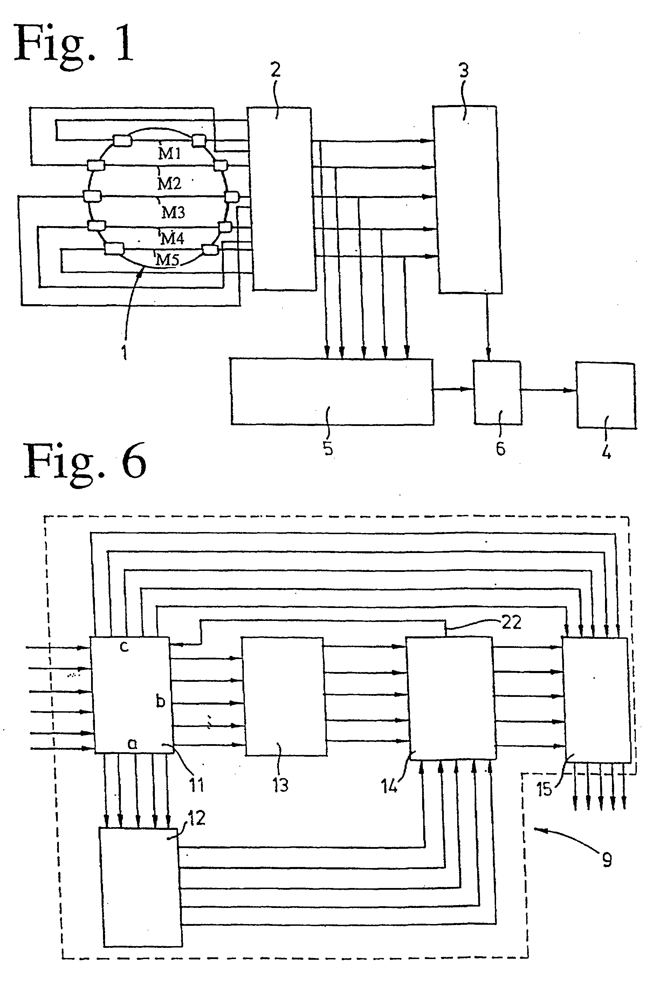

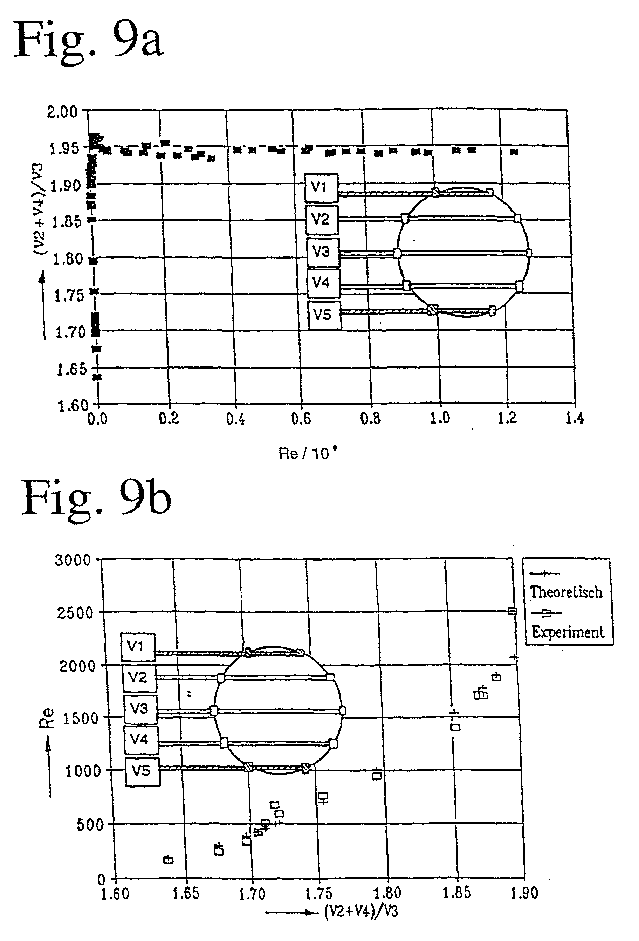

Im weiteren wird nun das Verfahren und die Vorrichtung zur Verwirklichung des Verfahrens unter Bezugnahme auf Fig. 1 erläutert. Die fünf die Meßpfade M1 bis M5 bildenden, an dem Meßrohr 1 angeschlossenen Ultraschallwandlerpaare sind mit einem Wandler 2 verbunden, welcher die verschiedenen Geschwindigkeiten des strömenden Mediums entlang der Meßpfade M1 bis M5 beispielsweise aus den Laufzeitdifferenzen der Ultraschallsignale bestimmt. Über verschiedene, später erläuterte Einheiten werden diese Geschwindigkeiten einem Addierer 3 zugeführt, wo sie jeweils mit entsprechenden Gewichtsfaktoren multipliziert und anschließend aufsummiert werden. Die am Ausgang des Addierers 3 anliegende mittlere Geschwindigkeit, also die Durchflußmenge pro Querschnittsfläche des Meßrohres, liegt an einem Durchflußkorrektor 6 zur Korrektur der Durchflußmenge an. In dem Durchflußkorrektor 6 ist eine auf empirischen Daten basierende, beispielsweise in Fig. 8 dargestellte Fehlerkurve gespeichert, die außer der Reynoldsschen Zahl alle anderen, mit der erfindungsgemässen Vorrichtung verbundenen technologischen Toleranzen beinhaltet. Diese Toleranzen werden nach der Produktion der erfindungsgemäßen Vorrichtung zur Durchführung des erfindungsgemäßen Ultraschall-Durchflußmeßverfahrens sorgfältig gemessen. Die von dem Wandler 2 errechnete Durchflußmenge wird nunmehr, basierend auf einer durch einen Reynoldszahlmesser 5 bestimmten Reynoldsschen Zahl, korrigiert. Die von dem Durchflußkorrektor 6 ausgegebene korrigierte Durchflußmenge wird anschließend von einer fakultativ vorsehbaren Anzeigevorrichtung 4 angezeigt. Wie bereits erwähnt, kann die erfindungsgemäße Vorrichtung mit Wasser geeicht werden, wobei die bei der Eichung erhaltenen Meßergebnisse auch für andere Medien, wie andere Flüssigkeiten und sogar Gase, übertragen werden, da für die Reynoldssche Zahl Re gilt:

$$Re = \frac{V_w \cdot D}{\vartheta_w} = \frac{V_m \cdot D}{\vartheta_m}$$

und

$$\upsilon_m = \frac{V_m}{V_w} \cdot \upsilon_w = \frac{V_m \cdot D}{\mathrm{Re}}$$

worin $V_w$ und $V_m$ die Durchflußgeschwindigkeiten von Wasser und einem zweiten Medium sind. $\upsilon_w$ und $\upsilon_m$ sind hierbei die kinematischen Viskositäten von Wasser und dem Medium, während D der Durchmesser des Meßrohres 1 ist. Es gilt beispielsweise bei 20° C:

$$\upsilon_{Wusser} = 10^{-6} m^2 / s$$

und

$$\upsilon_{Luft} = 15 \cdot 10^{-6} m^2 / s$$

Dies bedeutet, daß eine mit Wasser kalibrierte Vorrichtung zur Durchführung des erfindungsgemäßen Ultraschall-Durchflußmeßverfahrens mit dem Medium Luft ohne weiteres arbeitet, wenn die Geschwindigkeit der Luft um einen Faktor 15 höher ist als die Geschwindigkeit des Wassers bei der Eichung.

Vor der Bestimmung der Reynoldsschen Zahl ist es wichtig die Symmetrie des Strömungsprofils anhand der Geschwindigkeitsverhältnisse oder Geschwindigkeitsdifferenzen zu prüfen. Ist das aktuelle Strömungsprofil ungestört bzw. vollständig entwickelt, so werden die gemessenen Geschwindigkeiten ohne weiteres für die weitere Verarbeitung genutzt. Eine hohe Symmetrie des Strömungsprofils wird beispielsweise durch die Anordnung einer Venturidüse in der Leitung gefördert.

Vor der Inbetriebnahme der erfindungsgemäßen Vorrichtung bei dem Nutzer wird diese Vorrichtung beispielsweise mit Wasser geeicht. Hierzu wird in dem Bereich, in dem die Vorrichtung später eingesetzt wird, z. B. in einem Bereich für die mittlere Geschwindigkeit von 0,1 m/s bis 6 m/s, für eine Mehrzahl von Meßpunkten, z. B. bei 10%, 20%, 50% und 100% der maximalen mittleren Geschwindigkeit, eine Eichung durchgeführt. Bei dieser Eichung werden die für jeden Meßpfad gemessenen Geschwindigkeiten des strömenden Mediums bei einem ungestörten Eichströmungsprofil in einem Speicher abgelegt. Diese sogenannte Eichprofilmatrix ist charakteristisch für die Vorrichtung zur Durchführung des erfindungsgemäßen Ultraschall-Durchflußmeßverfahrens, da diese Matrix alle mechanischen, elektronischen, akustischen und hydraulischen Toleranzen beinhaltet.

Bei der Korrektur der Symmetrie des aktuellen Strömungsprofils sind zwei Fälle, abhängig von der Reynoldsschen Zahl, zu unterscheiden. Einerseits der Fall, bei dem mit großen Reynoldsschen Zahlen oberhalb von etwa 100.000 gearbeitet wird und andererseits der Fall, bei dem mit kleineren Reynoldsschen Zahlen gearbeitet wird. Im ersten Fall hat die Eichprofilmatrix für fünf Meßpfade $\|EPM\|$ folgende Gestalt:

$$\|EPM\| = \begin{pmatrix} V1p_{100\%} & \cdots & V5p_{100\%} \\ V1p_{50\%} & \cdots & V5p_{50\%} \\ \cdot & \cdot & \cdot \\ V1p_{10\%} & \cdots & V5p_{10\%} \end{pmatrix} \cdot \begin{pmatrix} G_1 \\ G_2 \\ \cdot \\ G_5 \end{pmatrix} = \begin{pmatrix} \sum Vp_{100\%} \\ \sum Vp_{50\%} \\ \cdot \\ \sum Vp_{10\%} \end{pmatrix} \qquad (\mathrm{Gl.\ 1})$$

worin

V1p, ... V5p die Geschwindigkeiten des strömenden Mediums entlang der entsprechenden Meßpfade bei dem Eichströmungsprofil sind,
$\Sigma Vp$ die entsprechende mittlere Geschwindigkeit oder Durchflußmenge pro Meßrohrquerschnitt bei dem Eichströmungsprofil ist,
G1, ... G5 die den Meßpfaden zugeordneten Gewichtsfaktoren sind, und
10%,... 100% die Meßpunkte im Betriebsbereich sind.

Bei der betriebsbereit montierten Vorrichtung zur Durchführung des erfindungsgemäßen Verfahrens wird in einem weiteren Eichprozeß zunächst die Betriebsprofilmatrix $\|BPM\|$ aufgenommen, welche die folgende Gestalt aufweist:

$$\|BPM\| = \begin{pmatrix} V1b_{100\%} & \ldots & V5b_{100\%} \\ V1b_{50\%} & \ldots & V5b_{50\%} \\ . & . & . \\ V1b_{10\%} & \ldots & V5b_{10\%} \end{pmatrix} \cdot \begin{pmatrix} G_1 \\ G_2 \\ . \\ G_5 \end{pmatrix} = \begin{pmatrix} \sum Vb_{100\%} \\ \sum Vb_{50\%} \\ . \\ \sum Vb_{10\%} \end{pmatrix} \qquad \text{(Gl. 2)}$$

worin

V1b ... V5b die Geschwindigkeiten entlang der entsprechenden Meßpfade bei dem Betriebsströmungsprofil sind, $\Sigma Vb$ die entsprechende mittlere Geschwindigkeit oder Durchflußmenge pro Meßrohrquerschnitt bei dem Betriebsströmungsprofil ist, und

G1, ... G5 wiederum die Gewichtsfaktoren der Meßpfade sind.

Für die soeben eingeführte Betriebsprofilmatrix $\|BPM\|$ werden die Durchflußmengen im Meßrohr in einem Gleichförmigkeitsgebiet, also bei Reynoldsschen Zahlen größer 100.000, übereinstimmend mit den Durchflußmengen bei der Aufnahme des Eichströmungsprofils künstlich eingestellt - beispielsweise mit Hilfe eines mobilen, geeichten Durchflußmengenerzeugers. In diesem Fall gilt:

$$\Sigma Vb_{100\%} = \Sigma Vp_{100\%} \qquad \text{(Gl. 3)}$$

In der Praxis ist es jedoch schwierig, die Gleichung 3 hinreichend genau zu erfüllen, da sich häufig nicht exakt die gleichen Durchflußmengen einstellen lassen. Um dennoch eine Korrektur der Strömungsprofile durchführen zu können, überführt man die Gleichung 3 in die folgende Form:

$$\beta \cdot \Sigma Vb_{100\%} = \Sigma Vp_{100\%} \qquad \text{(Gl. 3a)}$$

In Gleichung 3a ist $\beta$ ein Interpolationsfaktor zur Korrektur der Tatsache, daß sich die gleichen Durchflußmengen in der Regel nicht einstellen lassen. Gleichung 3a ist gleichbedeutend mit

$$\|V1b_{100\%} \cdot G1 \cdot \beta \ldots V5b_{100\%} \cdot G5 \cdot \beta\| = \|\Sigma V_{p_{100\%}}\| \qquad \text{(Gl. 4)}$$

Es wird nun eine Profildeterminante $\|Pr\,Det\|$ eingeführt, für die gilt:

$$\|Pr\,Det\| = \frac{\|Dp_{100\%}\|}{\|Db_{100\%}\|} = \left( \frac{V1p_{100\%}}{V1b_{100\%} \cdot \beta} \quad \ldots \quad \frac{V5p_{100\%}}{V5b_{100\%} \cdot \beta} \right) \qquad \text{(Gl. 5)}$$

worin

$\|Dp_{100\%}\|$ die Profildeterminante der Eichprofilmatrix ist, und
$\|Db_{100\%}\|$ die Profildeterminante der Betriebsprofilmatrix ist.

Bei der Anwendung des erfindungsgemäßen Verfahrens im Betrieb beim Nutzer wird dann die Korrektur mit der aktuellen Profilmatrix $\|APM\| = \|BPM\| \cdot \|Pr\,Det\|$ durchgeführt:

$$\frac{1}{\beta} \cdot \begin{pmatrix} V1p_{100\%} & \cdots & V5p_{100\%} \\ \dfrac{V1p_{100\%}}{V1b_{100\%}} V1b_{50\%} & \cdots & \dfrac{V5p_{100\%}}{V5b_{100\%}} V5b_{50\%} \\ \vdots & & \vdots \\ \dfrac{V1p_{100\%}}{V1b_{100\%}} V1b_{10\%} & \cdots & \dfrac{V5p_{100\%}}{V5b_{100\%}} V5b_{10\%} \end{pmatrix} \cdot \begin{pmatrix} G_1 \\ G_2 \\ \vdots \\ G_5 \end{pmatrix} = \begin{pmatrix} \sum Vbgec_{100\%} \\ \sum Vbgec_{50\%} \\ \vdots \\ \sum Vbgec_{10\%} \end{pmatrix} \qquad \text{(Gl. 6)}$$

worin

$\sum Vbgec$ die entsprechend korrigierten mittleren Geschwindigkeiten oder Durchflußmengen pro Querschnittfläche des Meßrohres in dem Meßrohr bei dem aktuellen Strömungsprofil sind.

Gleichung 6 gilt in der dargestellten Form nur für Medien, die sich über den betrachteten Bereich von 10% bis 100% der Nenndurchflußmenge linear verhalten. Für nichtlineare Medien sind die Korrekturen der Geschwindigkeiten des Mediums entlang der Meßpfade jeweils mit Hilfe der zugehörigen Koeffizienten aus der Eichprofilmatrix und der Betriebsprofilmatrix, z. B. $V1p_{50\%}$ / $V1b_{50\%}$ für eine Geschwindigkeit des strömenden Mediums auf dem Meßpfad M1 von $V1b_{50\%}$, durchzuführen. Für den Fall der nichtlinearen Medien ist es weiter notwendig, die Koeffizienten $\beta_1$, $\beta_2 \ldots \beta_5$ einzuführen - vgl. auch Gleichung 3a. Weiter werden für nichtlineare Medien die Korrekturkoeffizienten zwischen den nur diskret bekannten Werten interpoliert.

Nach der Korrektur des aktuellen Strömungsprofils mit Hilfe der Eichprofilmatrix und der Betriebsprofilmatrix läßt sich der relative Fehler der mittleren Geschwindigkeiten bzw. Durchflußmengen nach folgender Gleichung berechnen:

$$Fe = \left[ \frac{\sum Vbgec_i - \sum Vp_{100\%}}{\sum Vp_{100\%}} \right]_{i=0..100\%}^{max} \qquad \text{(Gl. 7)}$$

Zusammengefaßt wird bei der Verarbeitung mit Hilfe der genannten Profilmatrizen wie folgt vorgegangen. Zunächst sind mit Hilfe jeweils einer Eichung die Geschwindigkeiten des Mediums auf den Meßpfaden und die zugehörigen mittleren Geschwindigkeiten bzw. Durchflußmengen bei einem ungestörten Eichströmungsprofil und anschließend bei einem Betriebsströmungsprofil gemessen worden. Dann wird das Verhältnis zwischen den mittleren Geschwindigkeiten bzw. Durchflußmengen während der Aufnahme der Eichströmungsprofile und der Betriebsströmungsprofile festgehalten. Danach werden die aktuell gemessenen Geschwindigkeiten des Mediums entlang der Meßpfade bei dem aktuellen Strömungsprofil entsprechend diesem Verhältnis geändert. Anschließend werden die Verhältnisse der Geschwindigkeiten des Mediums entlang der Meßpfade bei dem Eichströmungsprofil und der abweichenden Geschwindigkeiten des Mediums entlang der Meßpfade bei dem Betriebsströmungsprofil gebildet und die entsprechenden Geschwindigkeiten des Mediums entlang der Meßpfade bei dem aktuellen Strömungsprofil mit diesen Verhältnissen multipliziert. Bei dieser Korrektur wird selbstverständlich, falls notwendig, mit einer Interpolation gearbeitet.

Liegt nach obiger Korrektur des Strömungsprofils ein ungestörtes Geschwindigkeitsprofil vor, so kann basierend auf diesem Strömungsprofil die Reynoldssche Zahl bestimmt werden.

Wie bereits erwähnt, wird die beschriebene Korrektur des Strömungsprofils abhängig von der Reynoldsschen Zahl durchgeführt. Die in Gleichung 1 wiedergegebene Eichprofilmatrix kann nur bei großen Reynoldszahlen, etwa größer als 100.000, verwendet werden, weil in diesem Fall die rechte Seite der hydrodynamischen Basisvektorgleichung von Navier-Stokes verschwindet

$$\frac{\partial \bar{\Omega}}{\partial t} + \bar{\nabla} \cdot (\bar{\Omega} \cdot \bar{V}) = \frac{1}{\text{Re}} \bar{\nabla}^2 \cdot \bar{\Omega} \qquad \text{(Gl. 8)}$$

worin

$\bar{\Omega}$ die Rotation der Geschwindigkeit $\bar{V}$ ist, was bedeutet, daß $\bar{\Omega} = \bar{\nabla} \cdot \bar{V}$ und
Re die Reynoldssche Zahl ist,

(vgl. auch Gleichung (41.23) in "The Feynman Lectures on Physics, Reading" von R. Fyenman, R. Leighton, M. Sands, Massachusetts, Palo Alto, London, Addison-Wesley Publishing Company, Inc. 1964)

Bei großen Reynoldsschen Zahlen folgt somit aus der hydrodynamischen Gleichung 8 die hydrostatische Basisvektorgleichung:

$$\frac{\partial \overline{\Omega}}{\partial t} + \overline{\nabla} \cdot (\overline{\Omega} \cdot \overline{V}) = 0 \qquad \text{(Gl. 9)}$$

Für diesen Fall sind die Eigenschaften des Mediums, z. B. die Viskosität, außer Betracht gelassen worden, da ihr Einfluß gering ist. Dieser geringe Einfluß hat zur Folge, daß sich die Strömungsprofilform in dem Gleichförmigkeitsgebiet für Reynoldssche Zahlen oberhalb 100.000 nur unwesentlich ändert.

Für den zweiten Fall kleinerer Reynoldsscher Zahlen ist der Einfluß der Eigenschaften des Mediums durchaus wesentlich, so daß es notwendig ist, die Eichprofilmatrix in einer anderen Form zu benutzen. Bei der Eichung wird in diesem Fall auch die Viskosität des Mediums ($\upsilon$) und der Durchmesser (D) des Meßrohres gemessen, so daß man für jedes Eichströmungsprofil eine entsprechende Reynoldsprofilmatrix $\|EPM\text{-Re}_p\|$ in dimensionsloser Form erhält:

$$\|EPM - \text{Re}_p\| = \|EPM\| \cdot \frac{D}{\upsilon} = \begin{pmatrix} \text{Re}_{p,100\%} \\ \text{Re}_{p,50\%} \\ \cdot \\ \text{Re}_{p,10\%} \end{pmatrix}$$

$$= \begin{pmatrix} \dfrac{V1p_{100\%}}{\sum Vp_{100\%}} & \cdots & \dfrac{V5p_{100\%}}{\sum Vp_{100\%}} \\ \dfrac{V1p_{50\%}}{\sum Vp_{100\%}} & \cdots & \dfrac{V5p_{50\%}}{\sum Vp_{100\%}} \\ \dfrac{V1p_{10\%}}{\sum Vp_{100\%}} & \cdots & \dfrac{V5p_{10\%}}{\sum Vp_{100\%}} \end{pmatrix} \cdot \begin{pmatrix} G_1 \\ G_2 \\ \cdot \\ G_5 \end{pmatrix} \cdot \frac{D}{\upsilon} \qquad \text{(Gl. 10)}$$

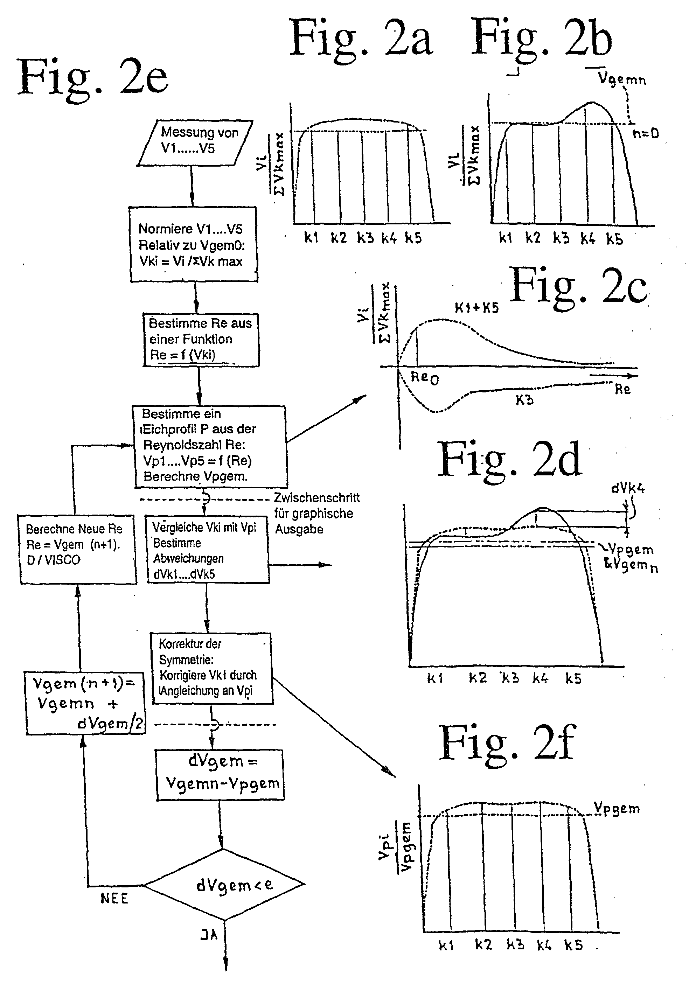

Aus Gleichung 10 ist zu entnehmen, daß bei der eingangs durchgeführten Eichung für jede Reynoldssche Zahl ein Eichprofil für die Vorrichtung zur Durchführung des erfindungsgemäßen Ultraschall-Durchflußmeßverfahrens in dimensionsloser Form mit Kompensation von Toleranzen gespeichert werden kann (vgl. Fig. 2a). Dimensionslos bedeutet, daß auch die aktuell gemessenen Geschwindigkeiten V1, ... V5 durch die mittlere Geschwindigkeit also die Durchflußmenge pro Querschnittsfläche des Meßrohres bei einer maximalen Durchflußmenge während einer Eichung im eingebauten Zustand der erfindungsgemäßen Vorrichtung dividiert werden, so daß $Vki = Vi / \Sigma Vk_{max}$.

Bei der Eichung im eingebauten Zustand werden entsprechend Gleichung 2 bei dem vom Eichströmungsprofil abweichenden Betriebsströmungsprofil die Geschwindigkeiten auf den Meßpfaden und die mittlere Geschwindigkeit, also die Durchflußmenge pro Querschnittsfläche des Meßrohres, wie folgt bestimmt:

$$\|V1k_{max} \cdot G_1 \ldots V5k_{max} \cdot G_5\| = \|\Sigma Vk_{max}\| \qquad \text{(Gl. 11)}$$

Hieraus folgt schließlich die dimensionslose Betriebsprofilmatrix, die da lautet:

$$\begin{pmatrix} \dfrac{V1k_{max}}{\sum Vk_{max}} \cdot G_1 & \cdots & \dfrac{V5k_{max}}{\sum Vk_{max}} \cdot G_5 \end{pmatrix} \qquad \text{(Gl. 12)}$$

Die dimensionslose Betriebsprofilmatrix ist in Fig. 2b wiedergegeben.

Basierend auf den im Betrieb gemessenen Geschwindigkeiten V1k, ... V5k des strömenden Mediums auf den Meßpfaden M1 bis M5 wird die Reynoldssche Zahl in nullter Näherung $Re_0$ anhand von noch zu erläuternden Gleichungen bestimmt. Für diese Reynoldssche Zahl in nullter Näherung $Re_0$ werden mit Hilfe der Gleichung 10 für eine übereinstimmende Reynoldssche Zahl der Eichung Rep die auch als Funktionen in analytischer Form darstellbaren Geschwindigkeiten auf den Meßpfaden aus den Eichströmungsprofilen ermittelt (vgl. Fig. 2c). Aus diesen Geschwindigkeiten auf den Meßpfaden wird gleichzeitig die mittlere Geschwindigkeit Vpgem ermittelt. Dieses Profil wird anschließend mit dem aktuellen Strömungsprofil verglichen (vgl. Fig. 2d), in dem die gefundene mittlere Geschwindigkeit Vgemn (in nullter Näherung n = 0, also Vgem0) mit der mittleren Geschwindigkeit Vpgem des Eichströmungsprofils verglichen wird (dVgem = Vgemn - Vpgem). Ist die gefundene Differenz zwischen. den mittleren Geschwindigkeiten größer als ein bestimmter Maximalwert ε, so wird in einem folgenden Iterationsprozeß eine kleinere Differenz angenommen, z. B. Vgem (n + 1) = Vgemn + dVgem / 2. Aus der neuen mittleren Geschwindigkeit wird die Reynoldssche Zahl $Re_1$ erster Näherung aus der Gleichung $Re_1$ = Vgem1. D/υ ermittelt. Mit Hilfe dieser Reynoldsschen Zahl in erster Näherung wird aus der gespeicherten Eichprofilmatrix eine neue mittlere Geschwindigkeit bestimmt, die anschließend wiederum verglichen wird (vgl. Fig. 2e und 2f). Ist die gefundene Differenz dVgem kleiner als der genannte Maximalwert ε, so wird der zuletzt gefundene Wert für die Reynoldssche Zahl zur Korrektur der Durchflußmenge verwandt. Mit Hilfe des geschilderten Iterationsprozesses ist eine verbesserte Genauigkeit gewährleistet.

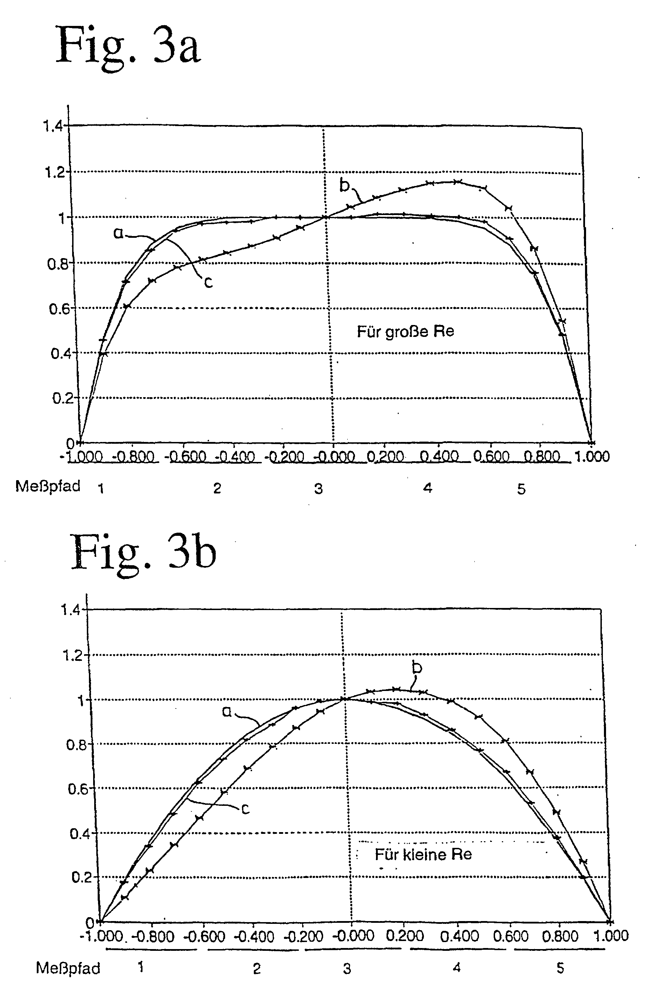

In den Fig. 3a und 3b sind Beispiele korrigierter dimensionsloser Strömungsprofile für große Reynoldssche Zahlen (Fig. 3a) und kleine Reynoldssche Zahlen (Fig. 3b) dargestellt. In beiden Figuren bezeichnet a das Eichströmungsprofil, b das gestörte Betriebsströmungsprofil und c das korrigierte Betriebsströmungsprofil.

Nach der beschriebenen Korrektur des Strömungsprofils wird der zuletzt gefundene Wert für die Reynoldssche Zahl an den Durchflußkorrektor 6 zur Korrektur der Durchflußmenge weitergegeben. Das gesamte Verfahren findet "real-time" statt.

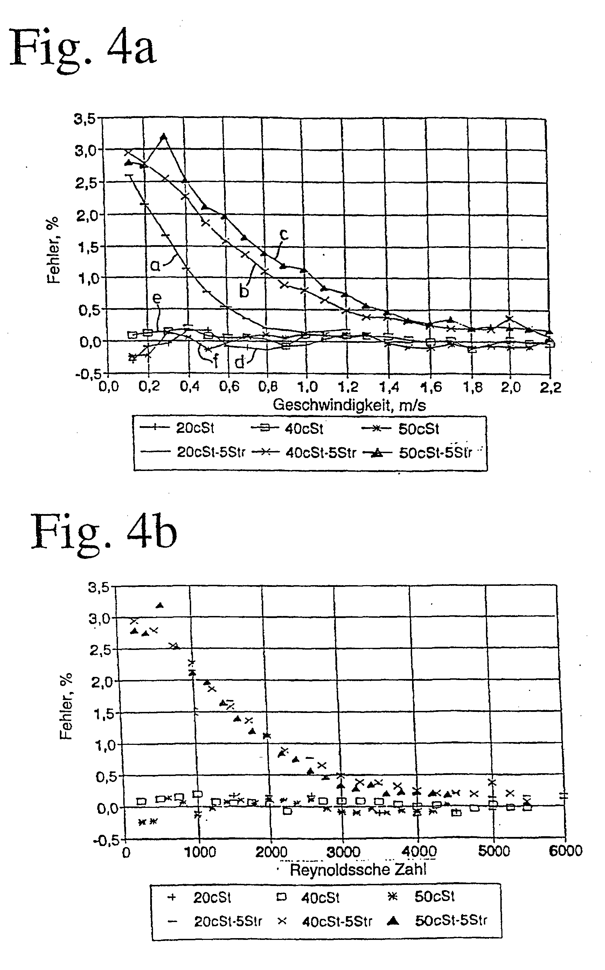

In den Fig. 4a und 4b sind Beispiele für die erfindungsgemäß gewährleistete Erhöhung der Genauigkeit grafisch dargestellt. Fig. 4a zeigt bei einem Ausführungsbeispiel mit fünf Meßpfaden die Prozentsätze der Fehler bei drei Medien mit verschiedener Viskosität (20 cSt, 40 cSt bzw. 50 cSt) in Abhängigkeit von der Geschwindigkeit in m/s bei einem Verfahren gemäß dem Stand der Technik (vgl. Kurven a, b, und c) und bei einer erfindungsgemäßen Vorrichtung zur Durchführung eines Ultraschall-Durchflußmeßverfahrens für strömende Medien (vgl. Kurven d, e und f). Hier ist deutlich ersichtlich, daß der Prozentsatz des Fehlers von Werten größtenteils oberhalb von 0,5 % bei Verfahren gemäß dem Stand der Technik durch das erfindungsgemäße Verfahren auf Werte unter 0,2 % für alle drei Medien reduziert ist.

In Fig. 4b sind für die selben drei Medien unterschiedlicher Viskosität die Prozentsätze der Fehler für die gleichen Meßresultate wiedergegeben, die auch in Fig. 4a dargestellt sind, jetzt jedoch nicht als Funktion der Geschwindigkeit, sondern als Funktion der Reynoldsschen Zahl, wiederum vor und nach der Korrektur. Hier fällt auf, daß durch die Darstellung als Funktion der Reynoldsschen Zahl alle drei Kurven a, b und c im wesentlichen zusammenfallen. Auch hier wird noch einmal deutlich, daß mit dem erfindungsgemäßen Ultraschall-Durchflußmeßverfahren für strömende Medien die Genauigkeit entscheidend verbessert wird.

Abhängig davon, ob das Strömungsprofil turbulenten oder laminaren Charakter aufweist, wird die Reynoldssche Zahl wie folgt bestimmt:

- Bei einem Strömungsprofil mit turbulentem Charakter wird die Reynoldssche Zahl aus den Geschwindigkeitsverhältnissen oder -differenzen der Meßpfade 2 und 4 ($V_2 + V_4$) und den Meßpfaden 1 und 5 ($V_1$ + V5) bestimmt;

- Bei einem Strömungsprofil mit laminarem Charakter wird die Reynoldssche Zahl aus den Geschwindigkeitsverhältnissen oder -differenzen der Geschwindigkeiten auf den Meßpfaden 2 und 4 ($V_2 + V_4$) und dem Meßpfad 3 (V3) bestimmt.

Die Reynoldssche Zahl kann also sowohl basierend auf Geschwindigkeitsverhältnissen (Fall a) der Geschwindigkeiten auf den Meßpfaden als auch basierend auf den Geschwindigkeitsdifferenzen (Fall b) der Geschwindigkeiten auf den Meßpfaden sowohl für Strömungsprofile mit turbulentem Charakter als auch für Strömungsprofile mit laminarem Charakter bestimmt werden.

Für den Fall a, daß also die Reynoldssche Zahl basierend auf Geschwindigkeitsverhältnissen bestimmt wird, liegt ein Strömungspropfil mit laminarem Charakter unter folgender Bedingung vor:

$$(V_2 + V_4)/V_3 < 1,9 \qquad \text{(Gl. 13)}$$

Umgekehrt weist ein Strömungsprofil einen turbulenten Charakter auf, wenn gilt:

$$(V_2 + V_4)/V_3 > 1,9 \tag{Gl. 14}$$

Die folgenden Gleichungen zur Bestimmung der Reynoldsschen Zahl wurden empirisch aufgefunden.

Bei einem Strömungsprofil mit laminarem Charakter gilt für die Reynoldssche Zahl:

$$Re_l = 19100((V_2 + V_4)/V_3)^2 - 60200(V_2 + V_4)/V_3 + 47700 \tag{Gl. 15}$$

Demgegenüber gilt für ein Strömungsprofil mit turbulentem Charakter für die Reynoldssche Zahl, falls diese kleiner als 30.000 ist:

$$Re_l = 6500 + 39000\sqrt{(5,14(V_2+V_4)/(V_1+V_5)-5,22)} \tag{Gl. 16}$$

Für eine Reynoldssche Zahl > 20.000 gilt bei einem Strömungsprofil mit turbulentem Charakter:

$$Re_l = 5080000((V_2 + V_4)/(V_1 + V_5))^2$$

$$-108600000(V_2+V_4)/(V_1+V_5)+5833000 \tag{Gl. 17}$$

Für den Fall b, in dem die Bestimmung der Reynoldsschen Zahl basierend auf Geschwindigkeitsdifferenzen ermittelt wird, liegt ein Strömungsprofil mit laminarem Charakter vor, wenn gilt:

$$(V_2+V_4)-1,9V_3 <0 \tag{Gl. 18}$$

Umgekehrt liegt ein Strömungsprofil mit turbulentem Charakter vor, wenn gilt:

$$(V_2 + V_4)-1,9V_3 > 0 \tag{Gl. 19}$$

Bei einem Strömungsprofil mit laminarem Charakter gilt nunmehr:

$$Re_l = A_1((V_2+V_4)-(V_1+V_5)/2)^2+B_1((V_2+V_4)-(V_1+V_5))/2+C_1 \tag{Gl. 20}$$

Demgegenüber gilt bei einem Strömungsprofil mit turbulentem Charakter für Reynoldssche Zahlen kleiner 30.000:

$$Re_t = A_2((V_2+V_4)-(V_1+V_5)/2)^2+B_2((V_2+V_4)-(V_1+V_5))/2+C_2 \tag{Gl. 21}$$

Schließlich gilt für Reynoldssche Zahlen größer 20.000 und Strömungsprofile mit turbulentem Charakter:

$$R_l = A_3((V_2+V_4)-(V_1+V_5)/2)^2+B_3((V_2+V_4)-(V_1+V_5))/2+C_3 \tag{Gl. 22}$$

Die Koeffizienten $A_1$ bis $A_3$, $B_1$ bis $B_3$ und $C_1$ bis $C_3$ in den Gleichungen 20 bis 22 werden empirisch ermittelt.

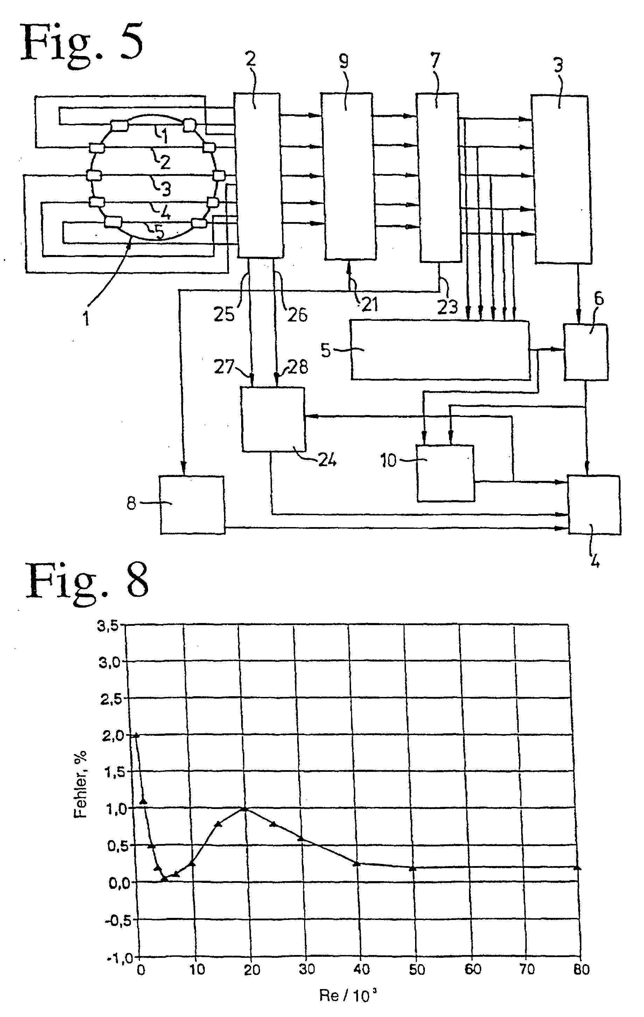

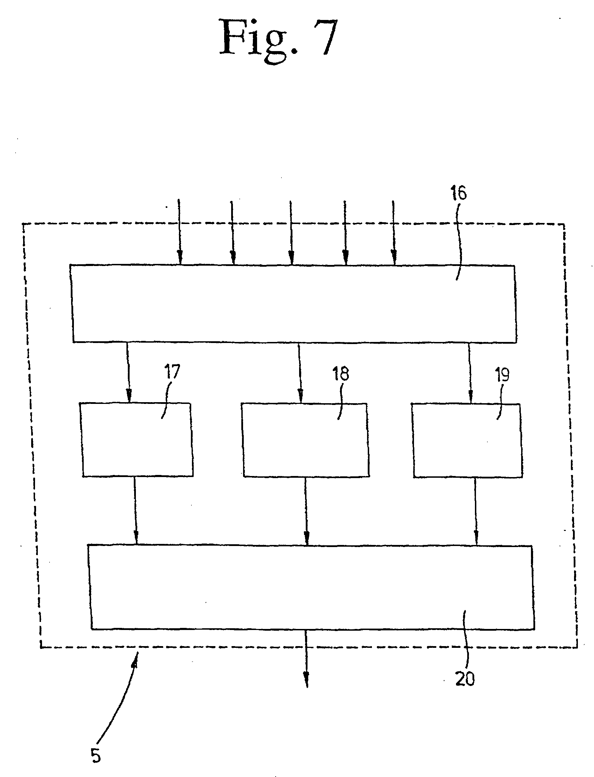

Wie bereits beschrieben, wird zum Zwecke einer einwandfreien Funktion des Durchflußkorrektors im Betrieb bei dem Nutzer das aktuelle Strömungsprofil insbesondere auf Abweichungen von den Eichströmungsprofilen oder Asymmetrien kontrolliert. Diese Kontrolle findet statt mit Hilfe eines Profilmessers 7 und eines Profilkorrektors 9, geschaltet zwischen den Wandler 2 und den Addierer 3. Diese werden im folgenden unter Bezugnahme auf die Fig. 5 und 6 erläutert. Der Profilmesser 7 vergleicht die Geschwindigkeiten auf den Meßpfaden und gibt bei Profilabweichungen oder bei einem defekten Sensor ein spezielles Signal von seinem Ausgang 23 ab an den Profilkorrektor 9 und an einen Alarmgeber 8. Tritt nun im Betrieb durch Installations- oder Einlaufeffekte, wie beispielsweise Krümmungen und vergleichbare Störungen, ein gestörtes Strömungsprofil auf, so können die Abweichung dieses gestörten Strömungsprofils von den Eichströmungsprofilen bzw. die Asymmetrien des gestörten Strömungsprofils durch den Profilkorrektor 9 im wesentlichen beseitigt werden. Die Wirkung dieses Profilkorrektors 9 basiert auf den Gleichungen 1 bis 12. Ein in Fig. 6 dargestellter, eine Einheit innerhalb des Profilkorrektors 9 bildender Umschalter 11 weist drei Stellungen auf, nämlich Stellung a für die Strömungsprofileichung, Stellung b für die Strömungsprofilangleichung und Stellung c für die Strömungsprofilüberwachung.

Der Umschalter 11 steht in der Stellung a, wenn die erfindungsgemäße Vorrichtung zur Durchführung eines Ultraschall-Durchflußmeßverfahrens für strömende Medien bei einem ungestörten Referenzströmungsprofil geeicht wird. In dieser Stellung wird in dem Eichströmungsprofilspeicher 12 die Eichprofilmatrix $\|EPM\|$ gespeichert (vgl. hierzu auch Gleichung 1).

Wird die erfindungsgemäße Vorrichtung zur Durchführung des Ultraschall-Durchflußmeßverfahrens für strömende Medien bei dem Nutzer installiert, so wird zunächst die Durchflußmenge in der an die erfindungsgemäße Vorrichtung angeschlossenen Leitung im wesentlichen auf die maximal mögliche Durchflußmenge im Betrieb eingestellt. Der Umschalter 11 steht in diesem Fall in Stellung b. In dieser Stellung wird die Betriebsprofilmatrix $\|BPM\|$ in einem Betriebsprofilspeicher 13 gespeichert (vgl. auch Gleichung 2). Anschließend bestimmt ein Profilvergleicher 14, basierend auf den Gleichungen 3, 4 und 5, die Profildeterminante $\|Pr\,Det\|$.

Unter normalen Bedingungen steht der Umschalter 11 im Betrieb in der Stellung c, so daß die Informationen über die Geschwindigkeiten auf den Meßpfaden vom Umschalter 11 direkt an einen Profilwandler 15 weitergegeben wird, der gemäß Gleichung 6 arbeitet. Am Ausgang des Profilwandlers 15 ist demzufolge im Prinzip ein ungestörtes und korrigiertes Strömungsprofil verfügbar. Basierend auf diesem Strömungsprofil wird in dem Reynoldszahlmesser 5 die Reynoldssche Zahl bestimmt, die anschließend dem Durchflußkorrektor 6 zur Verfügung gestellt wird. Dieser Durchflußkorrektor 6 arbeitet mit einer auch technologische Toleranzen der Vorrichtung berücksichtigenden Fehlerkurve. In Fig. 8 der Zeichnung ist eine solche Fehlerkurve beispielhaft dargestellt, wobei durch die Anwendung dieser Fehlerkurve ein maximaler Fehler von 0,15 % gewährleistet wird.

Bei Veränderungen in der an das Meßrohr angeschlossenen Leitung oder anderen hydraulischen Übergangsprozessen, z. B. im Falle des Schließens eines Regelventils, ändert sich das Strömungsprofil sehr schnell. Diese Änderung wird von dem Profilmesser 7 kontrolliert, und dieser gibt für den Fall einer signifikanten Änderung über den Ausgang 23 ein Signal an den Alarmgeber 8 und den Profilkorrektor 9 weiter (vgl. hierzu auch Fig. 6). In dem Profilkorrektor 9 wird dann der Umschalter 11 von der Stellung c umgeschaltet in die Stellung b. In dieser Stellung wird das über den Betriebsprofilspeicher 13 vermittelte Betriebsströmungsprofil verglichen mit den Eichströmungsprofil aus dem Eichströmungsprofilspeicher 12. Bei einer zu großen Abweichung zwischen den beiden Strömungsprofilen wird über den Rückkopplungsausgang 22 ein Rückkoppelsignal an den Umschalter 11 angelegt, woraufhin erneut ein Betriebsströmungsprofil im Betriebsströmungsprofilspeicher 13 abgelegt wird. Dies geschieht solange, bis "real-time" ein korrigiertes Betriebsströmungsprofil vorhanden ist, das dann von dem Umschalter 11 in der Stellung c wieder dem Wandler 15 zugeführt wird.

Die am Ausgang des Profilmessers 7 anliegenden Werte für die Geschwindigkeiten werden neben dem Addierer 3 auch dem Reynoldszahlmesser 5 zugeführt (vgl. auch Fig. 7 und Fig. 8). Ein sich in diesem Reynoldszahlmesser 5 befindender Turbulent-Laminar-Umschalter 16 arbeitet basierend auf den Gleichungen 13 und 14 oder 18 und 19. Dieser Turbulent-Laminar-Umschalter 16 ist verbunden mit einem Laminar-Strömungsmesser 17, einem Turbulent-Strömungsmesser 18 und einem Übergangs-Strömungsmesser 19, wobei diese Strömungsmesser 17, 18 und 19 basierend auf den Gleichungen 15, 16 und 17 oder 20, 21 und 22 arbeiten. Die an den Ausgängen dieser Strömungsmesser 17, 18 und 19 anliegenden Werte für die Reynoldssche Zahl werden anschließend einem Operationsausgangsverstärker 20 zugeführt.

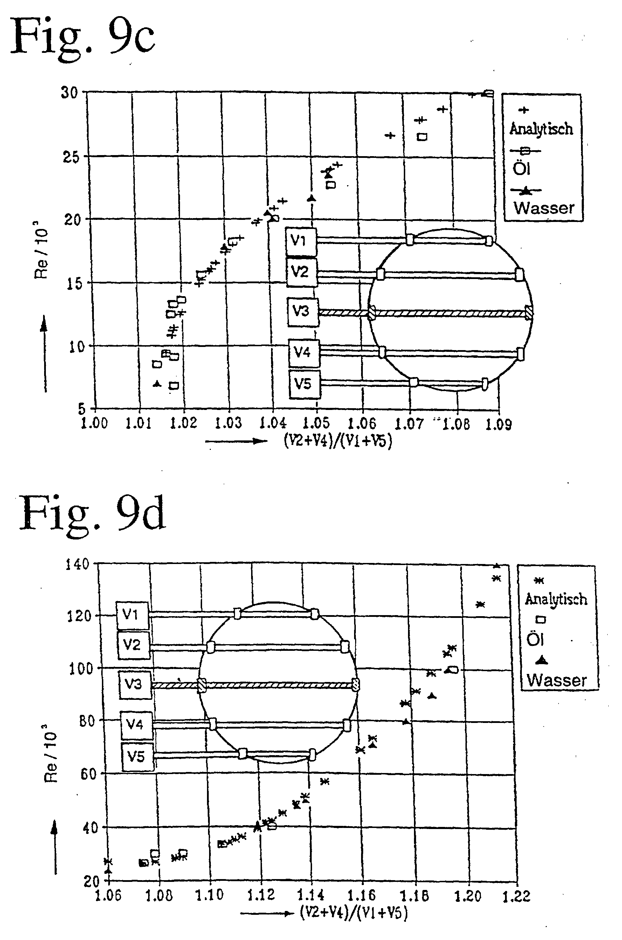

In den Fig. 9a bis 9d sind die der Funktionsweise des Reynoldszahlmessers 5 zugrundeliegenden Verhältnisse beispielhaft grafisch dargestellt. Fig. 9a zeigt eine grafische Darstellung des Verhältnisses $(V_2+V_4)/V_3$ als Funktion von der Reynoldsschen Zahl, die in Millionen aufgetragen ist, auf dessen Verlauf die Wirkung des Turbulent-Laminar-Umschalters 16 beruht. Fig. 9b zeigt eine grafische Darstellung der Reynoldszahl als Funktion des Verhältnisses $(V_2+V_4)/V_3$ auf dessen Verlauf die Wirkungsweise des Laminar-Strömungsmessers 17 beruht. In Fig. 9b sind sowohl experimentell bestimmte Meßdaten als auch theoretische Daten aufgetragen. In den Fig. 9c und 9d sind die Abhängigkeiten der Reynoldsschen Zahl, die in Tausenderschritten aufgetragen ist, von dem Verhältnis $(V_2+V_4)/(V_1+V_5)$ dargestellt, auf dessen Verlauf die Verarbeitung in dem Turbulent-Strömungsmesser 18 beruht. In den Fig. 9c und 9d sind die genannten Zusammenhänge sowohl für Meßdaten, mit Öl und Wasser als strömende Medien, als auch für theoretisch bestimmte Daten aufgetragen. Für Fig. 9c gilt in etwa, daß die Reynoldssche Zahl kleiner als 30.000 ist, während für Fig. 9d gilt, daß die Reynoldssche Zahl etwa größer als 20.000 ist.

Der an dem Ausgang des Operationsausgangsverstärkers 20 anliegende, "real-time" bestimmte Wert für die Reynoldssche Zahl wird neben dem Durchflußkorrektor 6 auch einem Viskositätsmesser 10 zugeführt. Dieser Viskositätsmesser 10 bestimmt die Viskosität des Mediums, basierend auf der Reynoldsschen Zahl, der mittleren Geschwindigkeit, also der Durchflußmenge pro Querschnittsfläche des Meßrohres, und dem Durchmesser des Meßrohres 1.

Der am Ausgang des Viskositätsmessers 10 anliegende Viskositätswert wird einerseits an die Anzeigevorrichtung 4 und andererseits an einen Mediumsidentifikator 24 weitergegeben. Diesem Mediumsidentifikator 24 stehen auch die vom Wandler 2 bestimmte Ultraschallgeschwindigkeit innerhalb des Mediums und/oder die Ultraschalldämpfung des Mediums zur Verfügung. Basierend auf der Viskosität des Mediums, der Ultraschallgeschwindigkeit im Medium und/oder der Ultraschalldämpfung des Mediums bestimmt der Mediumsidentifikator 24 den Typ des Mediums, z. B. den Erdöltyp, durch Vergleichen mit für bekannte Medien gespeicherten Daten.

**Patentansprüche**

1. Ultraschall-Durchflußmeßverfahren für strömende Medien, mit Hilfe eines Meßrohres und mit Hilfe mindestens zweier am Meßrohr angeordneter, jeweils einen Meßpfad bildender Ultraschallwandlerpaare, bei welchem die Durchflußmenge des strömenden Mediums aus der Geschwindigkeit des Mediums entlang mindestens zweier Meßpfade bestimmt wird und der Wert für die Durchflußmenge anhand eines Wertes für die Reynoldssche Zahl korrigiert wird, **dadurch gekennzeichnet, daß** die Reynoldssche Zahl des strömenden Mediums durchgängig und ausschließlich entweder anhand von vorbestimmten Konstanten sowie von Verhältnissen der Geschwindigkeiten entlang mindestens zweier voneinander verschiedener Meßpfade oder anhand von empirisch ermittelten Koeffizienten sowie von Differenzen der Geschwindigkeiten entlang mindestens zweier voneinander verschiedener Meßpfade bestimmt wird und die Korrektur des Wertes für die Durchflußmenge mit Hilfe des durchgängig bestimmten Wertes für die Reynoldssche Zahl erfolgt.

2. Verfahren nach Anspruch 1, **dadurch gekennzeichnet, daß** die Geschwindigkeiten des strömenden Mediums V1, V2, V3, V4 und V5 entlang fünf verschiedener Meßpfade bestimmt wird.

3. Verfahren nach Anspruch 2, **dadurch gekennzeichnet, daß** eine turbulente Strömung für $(V_2 + V_4)/V_3 > 1{,}9$ und eine laminare Strömung für $(V_2 + V_4)/V_3 < 1{,}9$ angenommen wird.

4. Verfahren nach Anspruch 3, **dadurch gekennzeichnet, daß** für den Fall einer turbulenten Strömung aus den Geschwindigkeitsverhältnissen oder -differenzen der Summe der Geschwindigkeiten entlang der Meßpfade 2 und 4 $(V_2 + V_4)$ und der Meßpfade 1 und 5 $(V_1$ und $V_5)$ die Reynoldssche Zahl bestimmt wird und daß für den Fall einer laminaren Strömung aus den Geschwindigkeitsverhältnissen oder -differenzen der Summe der Geschwindigkeiten entlang der Meßpfade 2 und 4 $(V_2 + V_4)$ und des Meßpfades 3 $(V_3)$ bestimmt wird.

5. Verfahren nach Anspruch 4, **dadurch gekennzeichnet, daß** für eine laminare Strömung die Reynoldssche Zahl aus den Geschwindigkeitsverhältnissen wie folgt bestimmt wird:

$$Re_l = 19100((V_2 + V_4) / V_3)^2 - 60200(V_2 + V_4) / V_3 + 47700$$

6. Verfahren nach Anspruch 4, **dadurch gekennzeichnet, daß** für eine turbulente Strömung die Reynoldssche Zahl aus den Geschwindigkeitsverhältnissen wie folgt bestimmt wird:

$$Re_t < 30.000 \quad Re_t = 6500 + 39000\sqrt{(5{,}14(V_2+V_4)/V_1+V_5)-5{,}22)}$$

$$Re_t > 20.000 \quad Re_t = 5080000((V_2 + V_4) / (V_1 + V_5))^2 - 108600000(V_2 + V_4) / (V_1 + V_5) + 5833000$$

7. Verfahren nach Anspruch 4, **dadurch gekennzeichnet, daß** für eine laminare Strömung die Reynoldssche Zahl aus den Geschwindigkeitsdifferenzen wie folgt bestimmt wird:

$$Re_l = A_1((V_2+V_4)-(V_1+V_5)/2)^2 + B_1((V_2+V_4)-(V_1+V_5))/2 + C_1$$

wobei $A_1$, $B_1$ und $C_1$ empirisch bestimmt werden.

8. Verfahren nach Anspruch 4, **dadurch gekennzeichnet, daß** für eine turbulente Strömung die Reynoldssche Zahl aus den Geschwindigkeitsdifferenzen wie folgt bestimmt wird:

$$\text{Re}_t < 30.000 \quad \text{Re}_t = A_2((V_2+V_4)-(V_1+V_5)/2)^2 + B_2((V_2+V_4)-(V_1+V_5))/2+C_2$$

$$\text{Re}_t > 20.000 \quad R_t = A_3((V_2+V_4)-(V_1+V_5)/2)^2 + B_3((V_2+V_4)-(V_1+V_5))/2+C_3,$$

wobei $A_2$, $B_2$, $C_2$, $A_3$, $B_3$ und $C_3$ empirisch bestimmt werden.

9. Verfahren nach einem der Ansprüche 1 bis 8, **dadurch gekennzeichnet, daß** in einem Eichprozeß aus den Geschwindigkeiten des Mediums entlang der Meßpfade für verschiedene Durchflußmengen und Reynoldssche Zahlen möglichst ungestörte Eichströmungsprofile aufgenommen werden.

10. Verfahren nach Anspruch 9, **dadurch gekennzeichnet, daß** im Eichprozeß mit Hilfe einer betriebsbereit montierten Vorrichtung zur Durchführung des Verfahrens nach einem der Ansprüche 1 bis 15 mindestens ein Betriebsströmungsprofil aufgenommen wird.

11. Verfahren nach Anspruch 10, **dadurch gekennzeichnet, daß** Abweichungen zwischen den Eichströmungsprofilen und den Betriebsströmungsprofilen rechnerisch korrigiert werden.

12. Verfahren nach Anspruch 11, **dadurch gekennzeichnet, daß** insbesondere für Reynoldssche Zahlen größer als 100.000 zur Aufnahme der Betriebsströmungsprofile möglichst den Durchflußmengen bei der Aufnahme der Eichströmungsprofile entsprechende Durchflußmengen des Mediums eingestellt werden, daß die Verhältnisse zwischen den einzelnen Geschwindigkeiten entlang der Meßpfade der Eichströmungsprofile und der Betriebsströmungsprofile bestimmt werden, daß mit diesen Verhältnissen die aktuell gemessenen Geschwindigkeiten entlang der Meßpfade korrigiert werden und daß bei dieser Korrektur die gemessenen Geschwindigkeiten mit den Verhältnissen der Durchflußmengen bei der Aufnahme der Eichströmungsprofile und bei der Aufnahme der Referenzströmungsprofile zusätzlich korrigiert werden.

13. Verfahren nach Anspruch 12, **dadurch gekennzeichnet, daß** die Korrekturfaktoren zwischen den während der Aufnahme der Eichströmungsprofile und der Betriebsströmungsprofile eingestellten Durchflußmengen anhand einer Interpolation bestimmt werden.

14. Verfahren nach Anspruch 11, **dadurch gekennzeichnet, daß** insbesondere für Reynoldssche Zahlen kleiner 100.000 die Eichprofile in dimensionaler Form für eine Mehrzahl von Reynoldsschen Zahlen gemessen und gespeichert werden, daß die aktuell gemessenen Geschwindigkeiten und die aktuelle Durchflußmenge zu einem dimensionslosen aktuellen Strömungsprofil verarbeitet werden und daß das dimensionslose aktuelle Strömungsprofil mit den Eichströmungsprofilen verglichen und anhand dieses Vergleiches korrigiert wird.

15. Verfahren nach einem der Ansprüche 1 bis 14, **dadurch gekennzeichnet, daß** anhand der Durchflußmenge, des Durchmessers des Meßrohres und der Reynoldsschen Zahl die Viskosität des Mediums bestimmt wird.

16. Verfahren nach Anspruch 15, **dadurch gekennzeichnet, daß** anhand der Viskosität und insbesondere weiterer mediumsabhängiger Meßgrößen eine Mediumsidentifikation vorgenommen wird.

17. Verfahren nach Anspruch 16, **dadurch gekennzeichnet, daß** als weitere mediumsabhängige Meßgrößen die Ultraschallgeschwindigkeit und/oder die Ultraschalldämpfung des Mediums bestimmt werden.

**Claims**

1. An ultrasound method of measuring the rate of flow of a flowing medium, using a measuring tube and at least two pairs of ultrasound transducers arranged on the measuring tube forming a measuring path, in which the rate of flow of the flowing medium is determined from the velocities of the medium along at least two measuring paths and the value for the flow rate is corrected according to a value for the Reynolds' number, **characterized in that** the Reynolds' number of the flowing medium is measured continuously and only either according to predetermined constants such as the ratio of the velocities along at least two differing measuring paths or according to empirically determined coefficients as well as the differences of the velocities along at least two differing measurement paths and that the value for the rate of flow is corrected using the value for the continuously measured Reynolds' number.

2. The method according to claim 1, **characterized in that** the velocities of the flowing medium V1, V2, V3, V4 and V5 are determined along five different measuring paths 1 to 5.

3. The method according to claim 2, **characterized in that** a turbulent flow for $(V_2+V_4)$ $/V_3>1,9$ and a laminar flow for $(V_2+V_4)/V_3<1,9$ is assumed.

4. The method according to claim 3, **characterized in that** in the case of a turbulent flow, the Reynolds' number is determined from the velocity ratios or differences in the sum of the velocities along measuring paths 2 and 4 $(V_2+V_4)$ and the measuring paths 1 and 5 $(V_1+V_5)$, and in the case of a laminar flow it is determined from the velocity ratios or differences in the sum of the velocities along measuring paths 2 and 4 $(V_2+V_4)$ and measuring path 3 $(V_3)$.

5. The method according claim 4, **characterized in that** for a laminar flow, the Reynolds' number is determined from the velocity ratios as follows:

$$\text{Re}_l = 19100((V_2+V_4)/V_3)^2 - 60200(V_2+V_4)/V_3 + 47700$$

6. The method according to claim 4, **characterized in that** for a turbulent flow, the Reynolds' number is determined as follows from the velocity ratios:

$$\text{Re}_l < 30.000 \quad \text{Re}_l = 6500 + 39000\sqrt{(5,14(V_2+V_4)/(V_1+V_5)-5,22)}$$

$$\text{Re}_l > 20.000 \quad \text{Re}_l = 5080000((V_2+V_4)/(V_1+V_5))^2$$
$$-108600000(V_2+V_4)/(V_1+V_5)+5833000$$

7. The method according to claim 4, **characterized by** the fact that for laminar flow, the Reynolds' number is determined from the velocity difference as follows:

$$\text{Re}_l = A_1((V_2+V_4)-(V_1+V_5)/2)^2 + B_1((V_2+V_4)-(V_1+V_5))/2 + C_1$$

where $A_1$, $B_1$ and $C_1$, are determined empirically.

8. The method according to claim 4, **characterized in that** for a turbulent flow, the Reynolds' number is determined as follows from the velocity differences:

$$\text{Re}_1 = A_2((V_2+V_4)-(V_1+V_5)/2)^2 + B_2((V_2-V_4)-(V_1+V_5))/2 + C_2$$

$$\text{Re}_1 = A_3((V_2+V_4)-(V_1+V_5)/2)^2 + B_3((V_2-V_4)-(V_1+V_5))/2 + C_3$$

where $A_2$, $B_2$, $C_2$, $A_3$, $B_3$ and $C_3$ are determined empirically.

9. The method according to any one of claims 1 to 8, **characterized in that** in a calibration process, calibration flow profiles that are as undisturbed as possible are recorded from the velocities of the medium along the measuring paths for various rates of flow and Reynolds' number

10. The method according to claim 9, **characterized in that** in a calibration process, at least one operating flow profile is recorded with the help of a device that is mounted, ready to operate and uses the method according to any one of Claims 1 to 15.

11. The method according to claim 10, **characterized in that** deviations between the calibration flow profiles and the operating flow profiles are corrected arithmetically.

12. The method according to claim 11, **characterized in that** for Reynolds' numbers greater than 100,000, to record the operating flow profile, rates of flow for the medium are set that correspond as much as possible to the rates of flow when the calibration flow profile is recorded, that the ratios between the individual velocities along the measuring paths of the calibration flow profile and the operating flow profile are determined, that with these ratios, the current measured velocities along the measuring paths are corrected and that with this correction, the measured velocities are also corrected with the ratios of the rates of flow when the calibration flow profiles are recorded and when the reference flow profiles are recorded.

13. The method according to claim 12, **characterized in that** the correction factors between the rates of flow set during the recording of the calibration flow profile and the operating flow profile are determined using interpolation.

14. The method according to claim 13, **characterized in that** especially for Reynolds' numbers smaller than 100,000, the calibration profiles are measured and stored in dimensional form for a large number of Reynolds' numbers, that the current measured velocities and the current rate of flow for a dimensionless current flow profile are processed and that the dimensionless current flow profile is compared with the calibration flow profiles and corrected by using said comparison.

15. The method according to one of claims 1 to 14, **characterized in that** the viscosity of the medium is determined using the rate of flow, the diameter of the measuring tube and the Reynolds' number.

16. The method according to claim 15, **characterized in that** the medium is identified using the viscosity and particularly other medium-dependent measured variables.

17. The method according claim 16, **characterized in that** the ultrasound velocity and/or the ultrasound damping of the medium are determined as another medium dependent measured variable.

**Revendications**

1. Procédé de mesure du débit par ultrasons destiné à des milieux qui s'écoulent, à l'aide d'un tube de mesure et à l'aide d'au moins deux paires de transducteurs ultrasonores disposées sur le tube de mesure, formant respectivement une voie de mesure, dans lequel on détermine le débit de passage du milieu qui s'écoule à partir de la vitesse des milieux le long d'au moins deux voies de mesure et on corrige la valeur concernant le débit de passage en se référant à une valeur pour le nombre de Reynolds, **caractérisé en ce qu'**on détermine en continu et de manière exclusive le nombre de Reynolds du milieu qui s'écoule, soit en se référant à des constantes prédéterminées ainsi qu'à des rapports des vitesses le long d'au moins deux voies de mesure différentes l'une de l'autre, soit en se référant à des coefficients déterminés de manière empirique et à des différences des vitesses le long d'au moins deux voies de mesure différentes l'une de l'autre, la correction de la valeur concernant le débit de passage ayant lieu à l'aide de la valeur déterminée en continu pour le nombre de Reynolds.

2. Procédé selon la revendication 1, **caractérisé en ce qu'**on détermine les vitesses du milieu qui s'écoule V1, V2, V3, V4 et V5 le long de cinq voies de mesure différentes.

3. Procédé selon la revendication 2, **caractérisé en ce qu'**on considère un écoulement turbulent pour (V2 + V4)/V3 > 1,9 et un écoulement, laminaire pour (V2 + V4)/V3 < 1,9.

4. Procédé selon la revendication 3, **caractérisé en ce que**, dans le cas d'un écoulement turbulent, on détermine le nombre de Reynolds à partir des rapports de vitesses ou des différences de vitesses de la somme des vitesses le long des voies de mesure 2 et 4 (V2 + V4) et le long des voies de mesure 1 et 5 (V1 et V5) et **en ce que**, dans le cas d'un écoulement laminaire, on détermine le nombre de Reynolds à partir des rapports de vitesses ou des différences de vitesses de la somme des vitesses le long des voies de mesure 2 et 4 (V2 + V4) et le long de la voie de mesure 3 (V3).

5. Procédé selon la revendication 4, **caractérisé en ce qu'**on détermine, pour un écoulement laminaire, le nombre de Reynolds, à partir des rapports de vitesses, comme suit :

$$\text{Re}_l = 19100((V_2+V_4)/V_3)^2 - 60200(V_2+V_4)/V_3 + 47700$$

6. Procédé selon la revendication 4, **caractérisé en ce qu'**on détermine, pour un écoulement turbulent, le nombre de Reynolds, à partir des rapports de vitesses, comme suit :

$$\text{Re}_l < 30.000 \quad \text{Re}_l = 6500 + 39000\sqrt{(5,14(V_2+V_4)/V_1+V_5)-5,22)}$$

$$\text{Re}_l > 20.000 \quad \text{Re}_l = 5080000((V_2+V_4)/(V_1+V_3))^2 - 108600000(V_2+V_4)/(V_1+V_3) + 5833000$$

7. Procédé selon la revendication 4, **caractérisé en ce qu'**on détermine, pour un écoulement laminaire, le nombre de Reynolds, à partir des différences de vitesses, comme suit :

$$\text{Re}_l = A_1((V_2+V_4)-(V_1+V_5)/2)^2 + B_1((V_2+V_4)-(V_1+V_5))/2 + C_1$$

formule dans laquelle $A_1$, $B_1$ et $C_1$ sont déterminés par voie empirique.

8. Procédé selon la revendication 4, **caractérisé en ce qu'**on détermine, pour un écoulement turbulent, le nombre de Reynolds, à partir des différences de vitesses, comme suit :

$$\text{Re}_l < 30.000 \quad \text{Re}_l = A_2((V_2+V_4)-(V_1+V_5)/2)^2 + B_2((V_2+V_4)-(V_1+V_5))/2 + C_2$$

$$\text{Re}_l > 20.000 \quad R_l = A_3((V_2+V_4)-(V_1+V_5)/2)^2 + B_3((V_2+V_4)-(V_1+V_5))/2 + C_3,$$

formule dans laquelle $A_2$, $B_2$, $C_2$, $A_3$, $B_3$ et $C_3$ sont déterminés par voie empirique.

9. Procédé selon l'une quelconque des revendications 1 à 8, **caractérisé en ce qu'**on enregistre, dans un processus d'étalonnage, à partir des vitesses du milieu le long des voies de mesure pour différents débits de passage et pour différents nombres de Reynolds, des profils d'écoulement étalons les moins perturbés possible.

10. Procédé selon la revendication 9, **caractérisé en ce qu'**on enregistre, dans le processus d'étalonnage, au moins un profil d'écoulement de fonctionnement à l'aide d'un dispositif monté à l'état prêt à fonctionner pour la mise en oeuvre du procédé selon l'une quelconque des revendications 1 à 15.

11. Procédé selon la revendication 10, **caractérisé en ce qu'**on corrige par calcul des déviations entre les profils d'écoulement étalons et les profils d'écoulement de fonctionnement.

12. Procédé selon la revendication 11, **caractérisé en ce qu'**on règle, en particulier pour des nombres de Reynolds supérieurs à 100.000, pour l'enregistrement des profils d'écoulement de fonctionnement, dans la mesure du possible, des débits de passage du milieu correspondants aux débits de passage lors de l'enregistrement des profils d'écoulement étalons, **en ce qu'**on détermine les rapports entre les vitesses individuelles le long des voies de mesure des profils d'écoulement étalons et des profils d'écoulement de fonctionnement, **en ce qu'**on corrige, avec ces rapports, les vitesses réellement mesurées le long des voies de mesure et **en ce que**, au cours de cette correction, on corrige en outre les vitesses mesurées avec les rapports des débits de passage lors de l'enregistrement des profils d'écoulement étalons et lors de l'enregistrement des profils d'écoulement de référence.

13. Procédé selon la revendication 12, **caractérisé en ce qu'**on détermine les facteurs de correction entre les débits de passage réglés au cours de l'enregistrement des profils d'écoulement étalon et au cours de l'enregistrement des profils d'écoulement de fonctionnement, en se référant à une interpolation.

14. Procédé selon la revendication 11, **caractérisé en ce que**, en particulier pour des nombres de Reynolds inférieurs à 100.000, on mesure et on mémorise la forme dimensionnelle pour une multitude de nombres de Reynolds, on traite les vitesses réellement mesurées et le débit de passage réel pour obtenir un profil d'écoulement réel adimensionnel et **en ce qu'**on compare le profil d'écoulement réel adimensionnel aux profils d'écoulement étalons et on procède à une correction en se référant à cette comparaison.

15. Procédé selon l'une quelconque des revendications 1 à 14, **caractérisé en ce qu'**on détermine la viscosité du milieu en se référant aux débits de passage, au diamètre du tube de mesure et au nombre de Reynolds.

16. Procédé selon la revendication 15, **caractérisé en ce qu'**on procède à une identification du milieu en se référant à la viscosité et en particulier à d'autres valeurs de mesure dépendant du milieu.

17. Procédé selon la revendication 16, **caractérisé en ce qu'**on détermine, à titre d'autres valeurs de mesure dépendant du milieu, la vitesse ultrasonore et/ou l'amortissement ultrasonore du milieu.

Fig. 1

Fig. 6

# Fig. 2e

# Fig. 2a

# Fig. 2b

# Fig. 2c

# Fig. 2d

# Fig. 2f

# Fig. 3a

Für große Re

Meßpfad    1          2          3          4          5

# Fig. 3b

Für kleine Re

Meßpfad    1          2          3          4          5

# Fig. 4a

# Fig. 4b

# Fig. 5

# Fig. 8

# Fig. 7

# Fig. 9a

# Fig. 9b

# Fig. 9c

# Fig. 9d